(19) Europäisches Patentamt
European Patent Office
Office européen des brevets

(11) **EP 4 380 696 B1**

(12) **EUROPÄISCHE PATENTSCHRIFT**

(45) Veröffentlichungstag und Bekanntmachung des Hinweises auf die Patenterteilung:
**14.05.2025   Patentblatt 2025/20**

(21) Anmeldenummer: **22737864.3**

(22) Anmeldetag: **27.06.2022**

(51) Internationale Patentklassifikation (IPC):
*C08F 265/06* $^{(2006.01)}$     *C09K 21/14* $^{(2006.01)}$
*C09D 7/61* $^{(2018.01)}$        *C09D 5/18* $^{(2006.01)}$
*C09D 7/63* $^{(2018.01)}$        *C09D 7/65* $^{(2018.01)}$
*A62C 2/06* $^{(2006.01)}$

(52) Gemeinsame Patentklassifikation (CPC):
(C-Sets verfügbar)
**C09D 5/185; C08F 265/06; C09D 7/61; C09D 7/63; C09D 7/65; C09K 21/14;** C08F 220/1804; C08K 5/34922; C08K 2003/323        (Forts.)

(86) Internationale Anmeldenummer:
**PCT/EP2022/067499**

(87) Internationale Veröffentlichungsnummer:
**WO 2023/011799 (09.02.2023 Gazette 2023/06)**

(54) **VERBESSERTES HARZSYSTEM FÜR AUFSCHÄUMENDE FEUERSCHUTZBESCHICHTUNGEN**

IMPROVED RESIN SYSTEM FOR FOAMING FIRE SAFETY COATINGS

SYSTÈME AMÉLIORÉ DE RÉSINE POUR REVÊTEMENTS IGNIFUGES INTUMESCENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **02.08.2021   EP 21189015**

(43) Veröffentlichungstag der Anmeldung:
**12.06.2024   Patentblatt 2024/24**

(73) Patentinhaber: **Röhm GmbH**
**64295 Darmstadt (DE)**

(72) Erfinder: **KELLER, Bruno**
**55263 Wackernheim (DE)**

(74) Vertreter: **Röhm Patent Association**
**IP Management**
**Deutsche-Telekom-Allee 9**
**64295 Darmstadt (DE)**

(56) Entgegenhaltungen:
WO-A1-2021/180488      CA-A1- 3 028 431
CN-A- 111 995 919      CN-A- 112 029 367
DE-A1- 19 630 063      JP-A- 2003 171 579

(52) Gemeinsame Patentklassifikation (CPC): (Forts.)

    C-Sets
    **C08F 265/06, C08F 220/14, C08F 220/1808,**
    **C08F 220/06;**
    C08F 220/1804, C08F 220/1808, C08F 220/14,
    C08F 220/283

## Beschreibung

Gebiet der Erfindung

Die vorliegende Erfindung betrifft ein neuartiges Reaktionsharzsystem zur Intumeszenz-Beschichtung und ein Verfahren zur Herstellung dieses Harzsystems. Intumeszenz-Beschichtungen werden insbesondere zum Brandschutz von metallischen Bauteilen, wie Stahlträgern im Hochbau eingesetzt. Dabei werden diese Beschichtungen in einem Brandfall reaktiv aufgeschäumt und bilden so eine feuerfeste Isolierschicht mit geringer Wärmeleitfähigkeit auf dem Metallträger und verzögert durch die damit entstehende Isolierung ein frühzeitiges, thermisch induziertes Versagen dieses Bauteils.

Die vorliegende Erfindung betrifft dabei insbesondere Methacrylat-basierte Harzsysteme, die mittels eines neuartigen Verfahrens, bei dem eine erste Monomermischung bis zu einem maximalen Grad von 95 Gew% polymerisiert und anschließend mit einer zweiten Monomermischung verdünnt wird, hergestellt werden. Dabei ist die Glasübergangstemperatur der polymeren Komponente der dabei gebildeten Zusammensetzung im Vergleich zum Stand der Technik besonders niedrig. Darüber hinaus wirken die im Harzsystem eingebauten organischen Säuren überraschend synergistisch mit dem Füllstoffsystem. Die so hergestellten Harzsysteme erweisen sich als besonders effizient beim temperaturinduzierten Aufschäumen durch ihre feinporige und geschlossenporige Schaumstruktur.

Stand der Technik

Eine erste Generation der Intumeszenz-Beschichtungssysteme basierte auf hochmolekularen thermoplastischen Harzen auf Basis von Acrylaten, Methacrylaten und/oder Vinylmonomeren und benötigen einen großen Lösemittel- oder Wasseranteil zur Aufbringung auf die entsprechende Metalloberfläche mit entsprechend langen Trocknungszeiten.

Üblicherweise werden solche Intumeszenz-Beschichtung on-site während der Konstruktionsphase aufgetragen. Bevorzugt werden jedoch off-site Auftragungen vor der Anlieferung an die Baustelle, da diese unter kontrollierten Bedingungen erfolgen können. Bei einer langsamen Trocknung ergibt sich aber eine ineffiziente Bearbeitungsdauer, zumal die Beschichtung nacheinander von verschiedenen Seiten erfolgen muss, um vollständig zu sein.

Die CN 112 029 367 A beschreibt beispielsweise ein Intumeszenzsystem in Form einer Emulsion, die Kern-Schale-Partikel in Wasser enthält. Der Kern der Kern-Schale-Partikel ist vernetzt.

Die CN 111 995 919 A offenbart ebenso wie die CA 3 028 431 Emulsionen von Acrylpolymeren als ultradünne Intumeszenz-Beschichtungen. Die Acrylpolymere liegen als Kern-Schale-Partikel vor, wobei der Kern vernetzt ist.

JP 2003 171 579 betrifft eine Mischung aus einer unpolymerisierten (Meth)acryl-Monomermischung und einem (Meth)acryl-Polymer. Die Mischung kann als Intumeszenz-Beschichtung verwendet werden. Ein Abbruch der Polymerisation bei einem bestimmten Polymerisationsgrad ist nicht offenbart.

Die DE 196 30 063 betrifft Innenausbauteile für Schienenfahrzeugteile. Intumeszenz-Beschichtungen werden nicht offenbart.

Epoxybasierte Intumeszenz-Beschichtungen werden vorzugsweise in der off-shore Industrie verwendet. Sie zeichnen sich durch gute Alterungsbeständigkeit und relativ kurze Trocknungszeiten aus. Polyurethan-Systeme wurden intensiv untersucht. Sie zeichnen sich ebenfalls durch eine relativ kurze Trocknungszeit und eine gute Wasserbeständigkeit aus. Allerdings fielen hier die Feuertests negativ aus, da die Beschichtung keine gute Haftung auf Stahl aufweist. Details dazu können in Development of alternative technologies for off-site applied intumescent, Longdon, P. J., European Commission, [Report] EUR (2005), EUR 21216, 1-141 nachgelesen werden.

Eine weitere Generation von Intumeszenz-Beschichtungen basiert auf (Meth)acrylat-Reaktionsharzen. Der Auftrag dieser hat den großen Vorteil, dass hier keine Lösungsmittel benötigt werden, sondern das Hartz nach der Applikation im Vergleich zu den zuvor beschriebenen Systemen relativ schnell aushärtet. So erhält man nicht nur eine schnellere Verarbeitung, sondern insbesondere auch einen geringeren Anteil an verbleibenden flüchtigen Bestandteilen in der aufgetragenen Beschichtung. Solche Intumeszenz-Beschichtungssysteme sind erstmals in EP 1 636 318 offenbart.

Eine weitere Verbesserung der (Meth)acrylat-basiertes Systeme ist daraufhin beispielsweise in EP 2 171 004 beschrieben. Dieses zeichnet sich durch einen besonders hohen Anteil an Säuregruppen zur Verbesserung der Metallhaftung aus. In EP 2 171 005 ist eine Weiterentwicklung zu einem solchen System offenbart. Diese zeichnet sich insbesondere durch Copolymerisation von di-Säuren oder copolymerisierbaren Säuren mit Spacergruppe aus. Dadurch kann die Metallhaftung zusätzlich verbessert werden.

Allen diesen Systemen unterliegen jedoch weiter einem Verbesserungsbedarf. So sind die Freiheitsgrade hinsichtlich der Formulierbarkeit stark eingeschränkt. Auch können ausschließlich relativ dicke Schichten aufgetragen werden. In der Kombination ergibt sich aus diesen Nachteilen z.B. auch, dass die Schaumhöhe im Bedarfs-, bzw. Brandfall nur in einem geringem Maß voreinstellen kann.

Darüber hinaus ergeben sich auch Nachteile aus dem relativ komplexen Herstellungsverfahren der Harze. Alle ansonsten sehr vorteilhaften, im Stand der Technik beschriebenen (Meth)acrylat-Systemen ist gemein, dass hier das im Harz enthaltene feste, thermoplastische Polymer erst diskret hergestellt, dann in den Monomerkomponenten aufgelöst und mit Additiven vorformuliert werden und schließlich kurz vor der Applikation als 2K-System schlussformuliert wird. Diese Prozesskette ist relativ aufwendig und es besteht ein großes Interesse an einer Vereinfachung.

In der WO 2021/180488 wird erstmalig die Herstellung eines Methacrylat-basierten Reaktionsharzes für Intumeszenzbeschichtungen in einem Sirupverfahren beschrieben. Dabei wird eine Monomermischung bis zu einem Polymerisationsgrad von 70% polymerisiert und anschließend die Polymerisation abgebrochen. Die Zusammensetzung ist dabei grundsätzlich den bereits bekannten Reaktionsharzen, die durch Lösen eines Suspensionspolymers oder Granulats in einer Monomermischung erhalten werden ähnlich. Unterscheidungen ergeben sich vor allem durch die Art der Polymerketten.

Aufgabe

Der vorliegenden Erfindung lag daher die Aufgabe zugrunde, ein deutlich vereinfachtes Verfahren zur Herstellung von (Meth)acrylat-basierten Intumeszenz-Beschichtungen bereitzustellen. Insbesondere bestand dabei der Bedarf an einem vereinfachten Herstellverfahren, bei dem mindestens ein Isolations- oder Formulierungsschritt gegenüber den im Stand der Technik beschriebenen Verfahren zur Herstellung von (Meth)acrylat-basierten Intumeszenz-Beschichtungen eingespart werden kann.

Weiterhin bestand die Aufgaben, eine neuartige Formulierung zur 2K-Intumeszenz-Beschichtung zur Verfügung zu stellen, die neben einer sehr guten Metallhaftung und einer einfachen Verarbeitbarkeit, zusätzlich größere Freiheiten bezüglich der Additivierung und der Einstellung einer späteren Schäumungskontrolle, insbesondere in Hinblick auf die Voreinstellung späterer Schaumhöhen und Schaumqualität, wie z.B. ein besonders hoher Anteil an geschlossen-porigem Schaum, zulässt.

Weitere nicht explizit aufgeführte Aufgaben können sich im Folgenden aus der Beschreibung oder den Beispielen, sowie aus dem Gesamtzusammenhang der Erfindung ergeben.

Lösung

Gelöst werden die Aufgaben durch die Bereitstellung eines neuartigen Verfahrens zur Herstellung von Reaktionsharzen für Intumeszenz-Beschichtungen. Bei diesem Verfahren wird zunächst eine erste Monomermischung, enthaltend mindestens ein säurefunktionelles Monomer, bis zu einem Polymerisationsgrad von 70 Gew.% bis 95 Gew.% polymerisiert. Daraufhin, bei Erreichen des gewünschten Polymerisationsgrads, wird die Polymerisation abgebrochen. Das dabei gebildete Polymer weist erfindungsgemäß eine gemäß Fox-Gleichung berechnete Glasübergangstemperatur von kleiner 23 °C auf, welche deutlich geringer ist, als für entsprechende Harze im Stand der Technik beschrieben. Weiterhin ist das erfindungsgemäße Verfahren dadurch gekennzeichnet, dass nach Abbruch der Polymerisation die 70 bis 95 Gew.% Polymer enthaltende Mischung mit einer zweiten Monomermischung, die sich von der ersten Monomermischung unterscheidet, verdünnt wird.

Im Stand der Technik beschriebene aufschäumende Feuerschutzbeschichtungen bestehen u.a. aus Mehrkomponenten Systemen, die aus thermoplastischen Polymeren gelöst in Monomeren grundformuliert sind. Die vorliegende Erfindung zeigt dagegen, dass auch flüssige Polymere, d.h. Polymere mit einer Glasübergangstemperatur, die bei einer Raumtemperatur unterhalb von 23°C ungelöst flüssig wären, für die Anwendung geeignet sind. Darüber hinaus dienen polymerisierte Säurekomponenten, wie u.a. 2-Carboxy-ethylacrylat zur Haftungsverbesserung auf dem Untergrund und zusätzlich hinzuformulierte Säurekomponenten, wie u.a. Acrylsäure oder Methacrylsäure, zu einer überraschenden Schaumhöhensteuerung in der finalen Anwendung als Feuerschutzanstrich.

Die Fox-Gleichung ist eine recht simple, jedoch zu realitätsnahen Ergebnissen führende Methode zur Berechnung von Glasüberganstemperaturen von homogenen (d.h. mit statistisch verteilten Wiederholungseinheiten) Copolymeren, die sich insbesondere für (Meth)acrylatcopolymere (optional mit Styrol) bewährt hat. Die Schreibweise (Meth)acrylat umfasst dabei Co-Acrylate, Co-Methacrylate sowie Copolymere, enthaltend Acrylate und Methacrylate. Für zwei Monomere lautet die Fox-Gleichung dabei wie folgt, wobei diese entsprechend auch auf eine Vielzahl verschiedener Comonomere erweitert werden kann:

$$T_g = T_{g1}\,(x_1) + T_{g2}\,(x_2) \ldots + T_{gy}\,(x_y)$$

Dabei sind

$T_g$: Die ermittelte theoretische Glasübergangstemperatur des Copolymers
$T_{gy}$: Die Glasübergangstemperatur eines Homopolymers des Monomers y
$x_y$: Der Massenanteil des Monomers y in der Monomermischung bzw. der Wiederholungseinheiten im Polymer

Erfindungsgemäß betreffen die Angaben sämtlicher Glasübergangstemperaturen Polymere, die freiradikalisch bei dafür üblichen Polymerisationstemperaturen zwischen 40 und 120 °C hergestellt wurden. Exotische Polymere, die bei deutlich tieferen Temperaturen mittels z.B. einer anionischen Polymerisation oder die stereoselektiv mittels einer GTP hergestellt wurden, spielen erfindungsgemäß keine Rolle. Für diese Polymere ist die Fox-Gleichung aufgrund stark abweichender Taktizitäten in gewählter Form auch nicht anwendbar. Die Glasübergangstemperaturen der Homopolymere, die mittels freiradikalischer Polymerisation hergestellt wurden, sind literaturbekannt.

Im Rahmen der vorliegenden Erfindung wird unter einer Monomermischung üblicherweise eine Monomermischung verstanden, die frei von Lösungsmittel ist. Insbesondere enthält eine Monomermischung im Sinne der vorliegenden Erfindung kein Wasser. Bevorzugt ist eine Monomermischung daher eine Mischung, die aus Monomeren besteht. Diese Ausführungen und Bevorzugungen gelten unabhängig voneinander sowohl für die erste Monomermischung als auch für die zweite Monomermischung.

Bevorzugt besteht die erste Monomermischung zu mindestens 90 Gew.% aus Acrylaten und/oder Methacrylaten, bezogen auf das Gesamtgewicht der ersten Monomermischung. Dabei handelt es sich genauso bevorzugt bei dem säurefunktionellen Monomer in der ersten Monomermischung um Acrylsäure, Methacrylsäure, Itaconsäure und/oder 2-Carboxy-ethylacrylat, bevorzugt um Methacrylsäure und/oder 2-Carboxy-ethylacrylat. Weiterhin enthält die erste Monomermischung bevorzugt neben dem säurefunktionellen Monomer als weitere Monomere Methyl(meth)acrylat (MMA), n-Butyl(meth)acrylat, iso-Butyl(meth)acrylat, Ethyl(meth)acrylat, Propyl(meth)acrylat, Ethylhexyl(meth)acrylat und/oder Styrol. Besonders bevorzugt besteht die erste Monomermischung zu mindestens 95 Gew.%, bezogen auf das Gesamtgewicht der ersten Monomermischung, ganz besonders bevorzugt ausschließlich aus den hier genannten Monomeren.

Ganz besonders bevorzugt enthält die Monomermischung dabei 20 bis 45 Gew.%, besonders bevorzugt 25 bis 40 Gew.% eines Methacrylats, wie insbesondere Ethylhexylmethacrylat. Bevorzugt werden bis zu 10 Gew.% des oder der säurefunktionellen Monomere in der Monomermischung eingesetzt, jeweils bezogen auf das Gesamtgewicht der ersten Monomermischung.

In einer Ausführungsform der Erfindung enthält die erste Monomermischung kein Styrol. Die erste Monomermischung ist also bevorzugt frei von Styrol.

Es ist weiterhin bevorzugt, dass die erste Monomermischung als Acrylat und/oder Methacrylat keinen Vernetzer enthält. Insbesondere bevorzugt enthält die erste Monomermischung keinen Vernetzer.

Unter einem "Vernetzer" wird im Rahmen der vorliegenden Erfindung ein Monomer verstanden, das zwei oder mehr funktionelle Gruppen umfasst, die bei der erfindungsgemäßen Polymerisation, insbesondere bei einer radikalischen Polymerisation, polymerisieren können.

Bevorzugt beträgt der Polymerisationsgrad beim Abbruch der Polymerisation zwischen 85 und 95 Gew.%. Besonders bevorzugt weist das erfindungsgemäß aus der ersten Monomermischung gebildete Polymer zwischen 1 und 10 Gew.%, bevorzugt zwischen 2,5 und 5 Gew.% Wiederholungseinheiten des säurefunktionellen Monomers auf, bezogen auf das Gesamtgewicht des gebildeten Polymers. Weiterhin bevorzugt hat das gebildete Polymer ein gewichtsmittleres Molekulargewicht $M_w$ zwischen 10.000 und 200.000 g/mol, bevorzugt zwischen 20.000 und 150.000 g/mol und besonders bevorzugt zwischen 30.000 und 100.000 g/mol und weist eine Glasüberganstemperatur zwischen -20 °C und 20 °C, bevorzugt zwischen -5 und 15 °C auf.

Dabei beziehen sich auch diese Angaben der Glasübergangstemperatur auf einen mittels Fox-Gleichung voreingestellten Wert. Die am Ende real erhaltene Glasüberganstemperatur kann nach der Polymerisation, z.B. mittels DSC (Dynamische Differenzkalorimetrie, beispielsweise gemäß ISO 11357-1 und insbesondere -2) bestimmt werden. Bei Verwendung der oben genannten Monomere weicht der dabei bestimmte Wert in der Regel nur minimal von dem mittels Fox-Gleichung voreingestellten Wert ab. Bei Abweichung dieser Monomere kann es in sehr seltenen Fällen zu einer blockartigen Verteilung der Wiederholungseinheiten in der Kette kommen. Dabei kann in sehr seltenen Fällen die Blockbildung derart ausgeprägt sein, dass das Polymer zwei oder mehrere Glasüberganstemperaturen aufweist. Für diese sehr seltenen, nicht bevorzugten erfindungsgemäßen Fälle ist nicht mehr die Berechnung der Glasüberganstemperatur mittels Fox-Gleichung maßgebend, sondern die Bestimmung der am stärksten ausgeprägten Glasüberganstemperatur gemäß zuvor genannter Norm ISO 11357-2.

Das gewichtsmittlere Molekulargewicht wird dabei mittels GPC gegen einen PMMA-Standard unter Einsatz von mindestens zwei geeigneten Säulen mit THF als Eluent durchgeführt.

Es hat sich überraschend als besonders vorteilhaft erwiesen, wenn das in dem erfindungsgemäßen Verfahren gebildete Polymer eine Glasübergangstemperatur unterhalb der umgebenden Raumtemperatur aufweist, also bei Raumtemperatur auch im isolierten Zustand flüssig wäre.

Insbesondere kann die Polymerisation diskontinuierlich in Batch-Fahrweise oder kontinuierlich im durchlaufenden Rührkessel mit anschließenden Strömungsrohr erfolgen. Der Abbruch der Reaktion kann dabei grundsätzlich unabhängig von der Fahrweise, jedoch auf diese jeweils angepasst durch Temperatursenkung, Zugabe eines Inhibitors und/oder einfach durch Verbrauch des Initiators beendet werden.

Bevorzugt enthält die zweite Monomermischung 50 bis 90 Gew.%, besonders bevorzugt 75 bis 85 Gew.% Methyl(meth)acrylat (MMA), bezogen auf das Gesamtgewicht der zweiten Monomermischung. Weiterhin bevorzugt besteht die zweite Monomermischung zu mindestens 90 Gew.% aus Acrylaten und/oder Methacrylaten und optional Styrol, bevorzugt aus MMA, n-Butyl(meth)acrylat, iso-Butyl(meth)acrylat, Ethyl(meth)acrylat, Propyl(meth)acrylat und-/oder Ethylhexyl(meth)acrylat, bis zu 5 Gew.% säurefunktionellen Monomere, bevorzugt um Acrylsäure, Methacrylsäure, Itaconsäure und/oder 2-Carboxy-ethylacrylat und optional zu höchstens 5 Gew.% Styrol, jeweils bezogen auf das Gesamtgewicht der zweiten Monomermischung.

In einer alternativen bevorzugten Ausführungsform der vorliegenden Erfindung enthält die zweite Monomermischung 55 bis 80 Gew.%, besonders bevorzugt 60 bis 75 Gew.% Methacrylat, jeweils bezogen auf das Gesamtgewicht der zweiten Monomermischung wobei hier Methyl(meth)acrylat und n-Butyl(meth)acrylat beispielsweise in einem Verhältnis von ca. 80 zu 20 Gew.% bis 50 zu 50 Gew.% eingesetzt werden.

In einer Ausführungsform enthält die zweite Monomermischung im Bereich von 0,5 bis 2 Gew.-% säurefunktionelle Monomere, bezogen auf das Gesamtgewicht der zweiten Monomermischung.

Unter "säurefunktionellen Monomeren" wird im Rahmen der vorliegenden Erfindung sowohl genau ein säurefunktionelles Monomer, als auch eine Mischung aus zwei oder mehreren säurefunktionellen Monomeren verstanden.

Weiterhin bevorzugt enthält die zweite Monomermischung kein Styrol. Die zweite Monomermischung ist daher bevorzugt frei von Styrol. Insbesondere bevorzugt ist das Reaktionsharz frei von Styrol.

Es ist weiterhin bevorzugt, dass die zweite Monomermischung keinen Vernetzer enthält. Insbesondere bevorzugt enthält das Reaktionsharz keinen Vernetzer. Für den Begriff "Vernetzer" gelten die zuvor beschriebenen Ausführungen und Bevorzugungen.

Insbesondere bevorzugt wird die zweite Monomermischung derart gewählt, dass sie auspolymerisiert zu einem Polymer mit einer Glasüberganstemperatur gemäß Fox-Gleichung zwischen 50 °C und 120 °C, bevorzugt zwischen 60 und 90 °C führen würde. Es sei an dieser Stelle klargestellt, dass das aus vorwiegend diesen Monomeren der zweiten Monomermischung gebildete Polymer der fertigen Intumeszenzbeschichtung von der mittels Fox-Gleichung berechneten theoretischen Glasüberganstemperatur der zweiten Monomermischung in den allermeisten Fällen abweichen muss, da diese zweite Polymerisation bei der Aushärtung auf Basis einer Mischung aus der zweiten Monomermischung sowie bis zu 30 Gew.% der verbliebenen, sich von der zweiten unterscheidenden ersten Monomermischung erfolgt, bezogen auf das Gesamtgewicht des Reaktionsharzes.

Neben dem erfindungsgemäßen Verfahren ist auch eine neuartige Formulierung zur 2K-Intumeszenz-Beschichtung Gegenstand der vorliegenden Erfindung. Diese Formulierung ist insbesondere dadurch gekennzeichnet, dass zu einem Zeitpunkt nach Mischen des 2K-Systems dieses 20 bis 40 Gew.% des mittels dem erfindungsgemäßen Verfahren hergestellten Reaktionsharzes, 35 bis 60 Gew.% eines Treibmittels, 0,1 bis 2,5 Gew.% eines Peroxids und/oder Azoinitiators, bevorzugt nur Peroxide, wie zum Beispiel Benzoylperoxid, optional bis zu 2 Gew.% eines Beschleunigers, optional 4,9 bis 15 Gew.% Additive und 5 bis 30 Gew.% Füllstoffe aufweist. Optional kann die Formulierung zusätzliche Pigmente aufweisen, jeweils bezogen auf das Gesamtgewicht des 2K-Systems.

Bei den Additiven kann es sich insbesondere um Netzmittel, Filmbildner, Entlüftungsreagenzien und/oder Dispergierhilfsmittel handeln. Bei den optional eingesetzten Beschleunigern handelt es sich in der Regel um sekundäre Amine.

Bei den Füllstoffen kann es sich beispielsweise um Siliziumdioxid, Titandioxid, Quarz oder andere, vor allem thermisch stabile anorganische Verbindungen handeln. Anorganische Füllstoffe wie Carbonate, die sich thermisch zersetzen können, dürfen nur in einem geringeren Maß eingesetzt werden, um ein unkontrolliertes zusätzliches Schäumen der Beschichtung im Brandfall zu vermeiden. Ein besonders bevorzugter Füllstoff ist Titandioxid.

Bezüglich der Treibmittel gibt es verschiedene Alternativen. In einer besonders bevorzugten Alternative können Polyphosphate eingesetzt werden, die sich bei 190 bis 300 °C zu Phosphorsäure umsetzen. Zusätzlich enthält die Formulierung Pentaerythritol, welches darauf bei über 300 °C in Anwesenheit der Phosphorsäure unter Abspaltung von Wasser und Kohlendioxid einen Kohlenstoffschaum bildet. Wasser und Kohlendioxid wirken dabei als Treibmittel. Ein zusätzlicher Vorteil dieser Alternative ist dabei, dass die Polyphosphate, wie auch die Phosphorsäure als zusätzliches Flammschutzmittel wirken.

In einer zweiten Alternative wird Melamin als Grundstoff für das Treibmittel eingesetzt, welches bei über 350 °C zu Ammoniak, Stickstoff und Kohlendioxid zersetzt wird, welche alle drei dabei wiederum als Treibmittel wirken.

Durch eine Kombination dieser beiden Alternativen als dritte, besonders bevorzugte Variante, lassen sich zusätzlich weitere Vorteile neben der Flammschutzwirkung realisieren. So kann der Schäumungsgrad feiner eingestellt werden. Auch kommt es zu einem stufenweisen Schäumen, was wiederum Vorteile bezüglich der Schaumstabilität bewirkt.

Besonders feinporige und geschlossenporige Schäume erhält man, wenn parallel zum erfindungsgemäßen Reaktionsharz überraschender Weise Polyphosphate und Melamin in einem Verhältnis zwischen 3 zu 1 und 1 zu 1, wie beispielsweise 2 zu 1 zumischt.

Der Initiator besteht in der Regel aus einem oder mehreren Peroxiden und/oder Azoinitiatoren, bevorzugt einem Peroxid. Er kann als Initiatorsystem zusammen mit einem Beschleuniger, in der Regel ein oder mehrere tertiäre Amine, insbesondere einem aromatischen tertiären Amin verwendet werden. Ein besonders geeignetes Beispiel für einen solchen Initiator ist diBenzoylperoxid, welches z.B. auch als sichere, vorformulierte Paste eingesetzt werden kann, wobei die Hilfsstoffe dieser Paste, wie z.B. Paraffine, in den entsprechenden Konzentrationen in der Formulierung nicht stören.

Beispiele für die Beschleuniger sind insbesondere N,N-di-Alkyl-para-toluidine, wie beispielsweise N,N-bis-(2-Hydroxypropyl)-para-toluidin oder N,N-di-Methyl-para-toluidin oder N,N-di-Methylanilin. Die Formulierung der eigentlichen Beschichtungszusammensetzung kann, wie folgt erfolgen: das Reaktionsharz wird mit den Treibmitteln, Additiven, optionalen Füllstoffen und weiteren optionalen Füllstoffen formuliert. Darauf erfolgt eine Aufteilung dieser Zwischenformulierungen in zwei z.B. gleichgroße Fraktionen. Eine dieser Fraktionen wird dann zusätzlich mit dem Beschleuniger vermischt. Diese beiden Fraktionen sind daraufhin für lange Zeit lagerstabil.

Vor der eigentlichen Applikation wird dann die Beschleuniger-freie Fraktion mit dem Initiator oder Initiatorgemisch versetzt. Nach längerer Lagerung oder Transport kann es vorher nötig sein, beide Fraktionen noch einmal aufzurühren, da sich z.B. Füllstoffe abgesetzt haben können. Nach dem Einrühren bzw. anderweitigen Einmischen des Initiators werden dann beide Fraktionen des 2K-Systems miteinander vermischt. Dabei wird die Polymerisation der monomeren Bestandteile des Reaktionsharzes gestartet und es beginnt die so genannte Topfzeit, innerhalb derer die Applikation auf dem Substrat, also z.B. einem Stahlträger, erfolgen muss. Bei modernen Applikationsvorrichtungen kann die Mischung der beiden Fraktionen des 2K-Systems auch in einer Mischkammer einer Applikationsdüse direkt vor dem mit Druck indiziertem Aufsprühen erfolgen.

Die Topfzeiten ergeben sich aus einer Kombination aus Art und Konzentration von Initiator und Beschleuniger, der Monomermischung und äußeren Einflussfaktoren, wie z.B. der Umgebungstemperatur. Diese Faktoren lassen sich für den Fachmann einfach abschätzen und einstellen. In der Regel wird mit mehrminütigen bis zu mehrstündigen Topfzeiten, die auch die 20 Stunden Marke überschreiten können, gearbeitet.

Weiterhin ist ein Verfahren zur Intumeszenz-Beschichtung einer Metalloberfläche Gegenstand der vorliegenden Erfindung. In diesem Verfahren wird die zuvor beschriebene die Formulierung zur 2K-Intumeszenz-Beschichtung hergestellt, binnen 1 bis 20 Minuten auf die Metalloberfläche aufgetragen und dort innerhalb von 60 Minuten bei einer Temperatur zwischen -5 und 30 °C, bevorzugt zwischen 0 und 30 °C ausgehärtet. Die bevorzugte Schichtdicke der nicht geschäumten Beschichtung beträgt dabei 1 bis 20 mm, besonders bevorzugt 1,5 bis 7,5 mm. Dies wäre dabei derart formuliert, dass die Beschichtung in einem Brandfall bevorzugt zu einer spezifischen Schichtdicke des Schaums von 5 bis 100 mm/mm Schichtdicke, bevorzugt 15 bis 50 mm/mm Schichtdicke führen würde.

Beispiele

## Beispiel 1

Monomerzulaufverfahren:

Die erste Monomermischung für den Polymeranteil, bestehend aus 23 Gew.% MMA, 33 Gew.% Ethylhexylmethacrylat, 36 Gew.% n-Butylmethacrylat und 8 Gew.% beta-CEA (2-Carboxy-ethylacrylat), wird bei Raumtemperatur mit 1 Gew.% Thioglykolsäure-2-ethylheylester und 0,6 Gew.% Di-(4-tert.-Butylcyclohexyl)peroxydicarbonat oder 2,2'-Azobis-(isobutyronitril) für das Zielmolekulargewicht von ca. 60.000 g/mol gemischt. Ein 25 Gew%iger Anteil der ersten Monomermischung wird als Vorbatch unter Rühren auf 74 °C aufgeheizt, die Heizung abgestellt und bei 86 °C durch kontinuierliche Zugabe des 75 Gew% ausmachenden Anteils der ersten Monomermischung autotherm bei ca. 90 bis 149 °C polymerisiert. Nach ca. 30 bis 60 Minuten Dosierzeit ist der Prozess abgeschlossen. Der Ansatz wird nach der Nachreaktionszeit von ca. 45 Minuten mit der zweiten Monomermischung zur Verdünnung, bestehend aus 79 Gew.% Methylmethacrylat, 20 Gew.% Ethylhexylacrylat und 1 Gew.% Methacrylsäure im Verhältnis von 30 Gew.% Polymeranteil und 70 Gew.% Monomermischung zur Verdünnung versetzt, bis auf 30 °C gekühlt und mit 15 ppm (15 mg/kg) 2,6-di-tert-butyl-4-methyl-phenol (Topanol O) stabilisiert und mit 1,2 Gew.% Wachse (Tropfpunkt ca. 60 °C) und 1,9 Gew.% N,N-bis-(2-Hydroxypropyl)-para-toluidin formuliert.

Die Viskosität wird über die Auslaufzeit 30 s DIN-Becher 4, entspricht 30 - 150 mPa*s bei 20 °C bestimmt. Der Zielpolymergehalt liegt bei ca. 30 bis 35 %. Das gebildete Polymer hat eine Glasübergangstemperatur von ca. -5 °C und ist nicht vernetzt.

Beispiel 2

Initiatorzulaufverfahren

Die erste Monomermischung für den Polymeranteil, bestehend aus 23 Gew.% MMA, 33 Gew.% Ethylhexylmethacrylat, 36 Gew.% n-Butylmethacrylat und 8 Gew.% beta-CEA (2-Carboxy-ethylacrylat), wird bei Raumtemperatur mit ca. 2 Gew.% Thioglykolsäure-2-ethylheylester gemischt. Die erste Monomermischung wird unter Rühren auf 74 °C aufgeheizt, die Heizung abgestellt und bei 86 °C durch kontinuierliche Zugabe des 0,6 Gew.% Di-(4-tert.-Butylcyclohexyl)peroxydicarbonat oder 2,2'-Azobis-(isobutyronitril) als 10 Gew.%ige Lösung in n-Butylacetat für das Zielmolekulargewicht von ca. 60.000 g/mol autotherm bei ca. 90 bis 120 °C polymerisiert. Nach ca. 60 bis 120 Minuten Dosierzeit ist der Prozess abgeschlossen. Der Ansatz wird nach der Nachreaktionszeit von ca. 45 Minuten mit der zweiten Monomermischung zur Verdünnung, bestehend aus 79 Gew.% Methylmethacrylat, 20 Gew.% Ethylhexylacrylat und 1 Gew.% Methacrylsäure im Verhältnis von 30 Gew.% Polymeranteil und 70 Gew.% Monomermischung zur Verdünnung versetzt, bis auf 30 °C gekühlt und mit 15 ppm (15 mg/kg) 2,6-di-tert-butyl-4-methyl-phenol (Topanol O) stabilisiert und mit 1,2 Gew.% Wachse (Tropfpunkt ca. 60 °C) und 1,9 Gew.% N,N-bis-(2-Hydroxypropyl)-para-toluidin formuliert.

Die Viskosität wird über die Auslaufzeit 30 s DIN-Becher 4, entspricht 30 - 150 mPa*s bei 20 °C bestimmt. Der Zielpolymergehalt liegt bei ca. 30 bis 35 %. Das gebildete Polymer hat eine Glasübergangstemperatur von ca. -5 °C und ist nicht vernetzt.

Vergleichsbeispiel 1:

DEGALAN® 1710 und DEGALAN® 1720 werden zu gleichen Teilen gemischt.

**Härten der Harzsysteme:**

2 Gew.% Benzoylperoxid auf Harzmischung

Vergleichsbeispiel 1:

Topfzeit: 18 min
Tmax: 85 °C nach 34 min Soll: 70 - 130 °C nach 15 - 40 min
Glasübergangstemperatur: 64 °C

Beispiel 1:

Topfzeit: 18 min
Tmax: 90 °C nach 42 Min Soll: 70 bis 130 °C nach 15 bis 40 Min
Glasübergangstemperatur: ca. -5 °C und ca. 74 °C

Dabei betrifft die niedrigere Glasübergangstemperatur das Polymer aus der teilweisen Polymerisation der ersten Monomermischung, während die höhere Glasübergangstemperatur das Polymer, welches beim finalen Aushärten der Beschichtung gebildet wird.

**Formulieren einer Feuerschutzbeschichtung**

Anwendungsbeispiel:

33,8 Gew.% des Reaktionsharzes gemäß Beispiel 1 und Vergleichsbeispiel 1 werden jeweils mit 30,0 Gew.% Ammoniumphosphat, 9,2 Gew.% Pentaerythritol, 15,0 Gew.% Melamin, 10,0 Gew.% Titandioxid und jeweils 1 Gew.% Kaolin und Netzmittel vorformuliert. Diese Formulierungen werden darauf in jeweils zwei gleichgroße Fraktionen geteilt, wobei einer Fraktion, bezogen auf die Gesamtformulierung, 0,5 Gew.% Benzoylperoxid zugesetzt werden. Diese beiden Fraktionen werden daraufhin miteinander vermischt und ein kleinerer Teil entnommen. Mit dem größeren Teil wird eine Stahlplatte in einer Schichtdicke von 2000 μm beschichtet, während an der kleineren Probe die Topfzeit und die Maximaltemperatur nach dem Mischen gemessen werden.

**Schäumungsversuch**

Versuche im Muffelofen High Therm VMK 39

Initiertes Harz-Füllstoffsystem mit einem 3000 μm Rakel auf ein entfettetes, 0,8 mm dickes Stahlblech aufgetragen. 24 Stunden aushärten gelassen, dann in den kalten Muffelofen legen und auf gewünschte Temperatur erhitzen. Nach Erreichen der Temperatur für eine Stunde die Temperatur halten, anschließend abkühlen lassen.

Beurteilung der Intumeszenz Beschichtung nach dem thermischen Schäumen, spezifischen Schaumhöhe, Schaumqualität und Haftung auf dem Stahlblech.

| Beispiel | Bezeichnung | T/ °C | Beschichtungshöhe nach dem Auspolymerisieren / mm | Spezifische Schaumhöhe mm / mm Beschichtungshöhe | Schaumqualität im Querschnitt | Überkopfhaftung nach thermischen Schäumen |
|---|---|---|---|---|---|---|
| VB1 | Vergleichsbeispiel | 500 | 2,7 | 16,7 | Groß- bis mittelgroßporig, offenporig | Keine Haftung auf dem Stahlblech |
| VB2 | Vergleichsbeispiel | 1000 | 2,8 | 18,2 | Groß- bis mittelgroßporig, offenporig | Keine Haftung auf dem Stahlblech |
| 1 | Erfindungsgemäßes Beispiel | 500 | 2,4 | 20,6 | Feinporig, geschlos-senporig | Haftung auf dem Stahl-blech |
| 2 | Erfindungsgemäßes Beispiel | 1000 | 2,7 | 19,8 | Feinporig, geschlos-senporig | Haftung auf dem Stahl-blech |

Die Ergebnisse der Beispiele 1 und 2 zeigen eine höhere spezifische Schaumhöhe und können dadurch eine bessere Feuerisolierende Wirkung entfalten.

**Patentansprüche**

1.  Verfahren zur Herstellung von Reaktionsharzen für Intumeszenz-Beschichtungen, **dadurch gekennzeichnet, dass** eine erste Monomermischung, enthaltend mindestens ein säurefunktionelles Monomer, bis zu einem Polymerisationsgrad von 70 Gew.% bis 95 Gew.% polymerisiert und darauf die Polymerisation abgebrochen wird, dass das dabei gebildete Polymer eine gemäß Fox-Gleichung berechnete Glasübergangstemperatur von kleiner 23 °C aufweist, und dass nach Abbruch der Polymerisation die 70 bis 95 Gew.% Polymer enthaltende Mischung mit einer zweiten Monomermischung, die sich von der ersten Monomermischung unterscheidet, verdünnt wird.

2.  Verfahren gemäß Anspruch 1, **dadurch gekennzeichnet, dass** die erste Monomermischung zu mindestens 90 Gew.% aus Acrylaten und/oder Methacrylaten besteht, und dass es sich bei dem säurefunktionellen Monomer in der ersten Monomermischung um Acrylsäure, Methacrylsäure, Itaconsäure und/oder 2-Carboxy-ethylacrylat, bevorzugt um Methacrylsäure und/oder 2-Carboxy-ethylacrylat handelt.

3.  Verfahren gemäß Anspruch 2, **dadurch gekennzeichnet, dass** das gebildete Polymer zwischen 1 und 10 Gew.%, bevorzugt zwischen 2,5 und 5 Gew.% Wiederholungseinheiten des säurefunktionellen Monomers aufweist, bezogen auf das Gesamtgewicht des gebildeten Polymers.

4.  Verfahren gemäß mindestens einem der Ansprüche 1 bis 3, **dadurch gekennzeichnet, dass** die zweite Monomermischung 50 bis 90 Gew.% MMA enthält, bezogen auf das Gesamtgewicht der zweiten Monomermischung.

5.  Verfahren gemäß mindestens einem der Ansprüche 1 bis 4, **dadurch gekennzeichnet, dass** die erste Monomermischung, aus dem säurefunktionellen Monomer und weiteren Monomeren, ausgewählt aus MMA, n-Butyl(meth)acrylat, iso-Butyl(meth)acrylat, Ethyl(meth)acrylat, Propyl(meth)acrylat, Ethylhexyl(meth)acrylat und/oder Styrol besteht.

6.  Verfahren gemäß mindestens einem der Ansprüche 1 bis 5, **dadurch gekennzeichnet, dass** das gebildete Polymer ein gewichtsmittleres Molekulargewicht Mw zwischen 10.000 und 200.000 g/mol und Glasüberganstemperatur zwischen -20 °C und 20 °C, bevorzugt zwischen -10 und 15 °C aufweist.

7.  Verfahren gemäß mindestens einem der Ansprüche 1 bis 6, **dadurch gekennzeichnet, dass** die Polymerisation diskontinuierlich in Batch-Fahrweise oder kontinuierlich im durchlaufenden Rührkessel mit anschließenden Strömungsrohr erfolgt, wobei die Reaktion durch Temperatursenkung, Zugabe eines Inhibitors und/oder Verbrauch des Initiators beendet wird.

8.  Verfahren gemäß mindestens einem der Ansprüche 1 bis 7, **dadurch gekennzeichnet, dass** der Polymerisationsgrad beim Abbruch der Polymerisation zwischen 85 und 95 Gew.% liegt.

9.  Verfahren gemäß mindestens einem der Ansprüche 1 bis 8, **dadurch gekennzeichnet, dass** die zweite Monomermischung zu mindestens 90 Gew.% aus Acrylaten und/oder Methacrylaten, bevorzugt MMA, n-Butyl(meth)acrylat, iso-Butyl(meth)acrylat, Ethyl(meth)acrylat, Propyl(meth)acrylat und/oder Ethylhexyl(meth)acrylat, bis zu 5 Gew.% säurefunktionellen Monomere, bevorzugt um Acrylsäure, Methacrylsäure, Itaconsäure und/oder 2-Carboxy-ethylacrylat und optional Styrol enthält, jeweils bezogen auf das Gesamtgewicht der zweiten Monomermischung.

10. Verfahren gemäß mindestens einem der Ansprüche 1 bis 9, **dadurch gekennzeichnet, dass** die zweite Monomermischung derart gewählt wird, dass sie auspolymerisiert zu einem Polymer mit einer Glasübergangstemperatur gemäß Fox-Gleichung zwischen 50 °C und 120 °C, bevorzugt zwischen 60 und 90 °C aufweist.

11. Formulierung zur 2K-Intumeszenz-Beschichtung, **dadurch gekennzeichnet, dass** die Formulierung nach Mischen des 2K-Systems 20 bis 40 Gew.% des nach den Ansprüchen 1 bis 10 herstellbaren Reaktionsharzes, 35 bis 60 Gew.% eines Treibmittels, 0,1 bis 2,5 Gew.% eines Peroxids und/oder Azoinitiators, optional bis zu 2 Gew.% eines Beschleunigers, optional 4,9 bis 15 Gew.% Additive und 5 bis 30 Gew.% Füllstoffe aufweist, jeweils bezogen auf das Gesamtgewicht des 2K-Systems.

12. Formulierung zur 2K-Intumeszenz-Beschichtung, **dadurch gekennzeichnet, dass** die Formulierung nach Mischen des 2K-Systems des nach den Ansprüchen 1 bis 10 herstellbaren Reaktionsharzes, ein Treibmittelverhältnis von Polyphosphat zu Melamin zwischen 1 zu 1 und 3 zu 1 aufweist.

13. Formulierung gemäß Anspruch 11 **dadurch gekennzeichnet, dass** die Formulierung zusätzlich Pigmente aufweist.

14. Verfahren zur Intumeszenz-Beschichtung einer Metalloberfläche, **dadurch gekennzeichnet, dass** die Formulierung gemäß Anspruch 11 oder 12 hergestellt, binnen 1 bis 20 Minuten auf die Metalloberfläche aufgetragen wird und dort innerhalb von 60 Minuten bei einer Temperatur zwischen -5 und 30 °C aushärtet.

**Claims**

1. Process for producing reactive resins for intumescent coatings, **characterized in that** a first monomer mixture comprising at least one acid-functionalized monomer is polymerized to a degree of polymerization of 70% by weight to 95% by weight, after which the polymerization is terminated, **in that** the polymer thereby formed has a glass transition temperature, calculated according to the Fox equation, of less than 23°C, and **in that**, after termination of the polymerization, the mixture containing 70 to 95% by weight of polymer is diluted with a second monomer mixture that differs from the first monomer mixture.

2. Process according to Claim 1, **characterized in that** the first monomer mixture consists to an extent of at least 90% by weight of acrylates and/or methacrylates, and **in that** the acid-functionalized monomer in the first monomer mixture is acrylic acid, methacrylic acid, itaconic acid and/or 2-carboxyethyl acrylate, preferably methacrylic acid and/or 2-carboxyethyl acrylate.

3. Process according to Claim 2, **characterized in that** the formed polymer contains between 1 and 10% by weight, preferably between 2.5 and 5% by weight, of repeat units of the acid-functionalized monomer, based on the total weight of the formed polymer.

4. Process according to at least one of Claims 1 to 3, **characterized in that** the second monomer mixture contains 50 to 90% by weight of MMA, based on the total weight of the second monomer mixture.

5. Process according to at least one of Claims 1 to 4, **characterized in that** the first monomer mixture consists of the acid-functionalized monomer and further monomers selected from MMA, n-butyl (meth)acrylate, isobutyl (meth) acrylate, ethyl (meth)acrylate, propyl (meth)acrylate, ethylhexyl (meth)acrylate and/or styrene.

6. Process according to at least one of Claims 1 to 5, **characterized in that** the formed polymer has a weight-average molecular weight Mw of between 10 000 and 200 000 g/mol and glass transition temperature of between -20°C and 20°C, preferably between -10 and 15°C.

7. Process according to at least one of Claims 1 to 6, **characterized in that** the polymerization is carried out discontinuously in a batchwise process or continuously in the continuously operated stirred-tank reactor with connecting flow tube, with the reaction terminated by lowering the temperature, adding an inhibitor and/or through consumption of the initiator.

8. Process according to at least one of Claims 1 to 7, **characterized in that** the degree of polymerization on termination of the polymerization is between 85 and 95% by weight.

9. Process according to at least one of Claims 1 to 8, **characterized in that** the second monomer mixture contains to an extent of at least 90 % by weight of acrylates and/or methacrylates, preferably MMA, n-butyl (meth)acrylate, isobutyl (meth)acrylate, ethyl (meth)acrylate, propyl (meth)acrylate and/or ethylhexyl (meth)acrylate, up to 5% by weight of acid-functionalized monomers, preferably acrylic acid, methacrylic acid, itaconic acid and/or 2-carboxyethyl acrylate, and optionally styrene, based in each case on the total weight of the second monomer mixture.

10. Process according to at least one of Claims 1 to 9, **characterized in that** the second monomer mixture is selected such that, when fully polymerized, it has to a polymer having a glass transition temperature according to the Fox equation of between 50°C and 120°C, preferably between 60 and 90°C.

**11.** Formulation for the 2C intumescent coating, **characterized in that**, after mixing the 2C system, the formulation contains 20 to 40% by weight of the reactive resin producible according to Claims 1 to 10, 35 to 60% by weight of a blowing agent, 0.1 to 2.5% by weight of a peroxide and/or azo initiator, optionally up to 2% by weight of an accelerator, optionally 4.9 to 15% by weight of additives and 5 to 30% by weight of fillers, based in each case on the total weight of the 2C system.

**12.** Formulation for the 2C intumescent coating, **characterized in that**, after mixing the 2C system of the reactive resin producible according to Claims 1 to 10, the formulation has a blowing agent ratio of polyphosphate to melamine of between 1 to 1 and 3 to 1.

**13.** Formulation according to Claim 11, **characterized in that** the formulation additionally comprises pigments.

**14.** Process for the intumescent coating of a metal surface, **characterized in that** the formulation prepared according to Claim 11 or 12 is applied to the metal surface within 1 to 20 minutes and cured thereon at a temperature of between -5 and 30°C within a period of 60 minutes.


**Revendications**

**1.** Procédé de préparation de résines réactives pour revêtements intumescents, **caractérisé en ce qu'**un premier mélange de monomères, contenant au moins un monomère à fonction acide, est polymérisé jusqu'à un degré de polymérisation de 70 % en poids à 95 % en poids et après cela la polymérisation est interrompue, **en ce que** le polymère ainsi formé présente une température de transition vitreuse, calculée selon l'équation de Fox, inférieure à 23°C, et **en ce qu'**après arrêt de la polymérisation le mélange contenant 70 à 95 % en poids de polymère est dilué avec un second mélange de monomères qui diffère du premier mélange de monomères.

**2.** Procédé selon la revendication 1, **caractérisé en ce que** le premier mélange de monomères est constitué à au moins 90 % en poids d'acrylates et/ou de méthacrylates, et **en ce que** pour ce qui est du monomère à fonction acide dans le premier mélange de monomères il s'agit d'acide acrylique, d'acide méthacrylique, d'acide itaconique et/ou d'acrylate de 2-carboxyéthyle, de préférence d'acide méthacrylique et/ou d'acrylate de 2 -carboxyéthyle.

**3.** Procédé selon la revendication 2, **caractérisé en ce que** le polymère formé comporte entre 1 et 10 % en poids, de préférence entre 2,5 et 5 % en poids d'unités répétitives du monomère à fonction acide, par rapport au poids total du polymère formé.

**4.** Procédé selon au moins l'une des revendications 1 à 3, **caractérisé en ce que** le second mélange de monomères contient 50 à 90 % en poids de MMA, par rapport au poids total du second mélange de monomères.

**5.** Procédé selon au moins l'une des revendications 1 à 4, **caractérisé en ce que** le premier mélange de monomères est constitué du monomère à fonction acide et d'autres monomères choisis parmi le MMA, le (méth)acrylate de n-butyle, le (méth)acrylate d'isobutyle, le (méth)acrylate d'éthyle, le (méth)acrylate de propyle, le (méth)acrylate d'éthylhexyle et/ou le styrène.

**6.** Procédé selon au moins l'une des revendications 1 à 5, **caractérisé en ce que** le polymère formé présente une masse moléculaire moyenne en poids comprise entre 10 000 et 200 000 g/mole et une température de transition vitreuse entre -20 °C et 20 °C, de préférence entre -10 et 15 °C.

**7.** Procédé selon au moins l'une des revendications 1 à 6, **caractérisé en ce que** la polymérisation s'effectue en discontinu en mode batch ou en continu dans une cuve à agitation et écoulement continu, à tube d'écoulement y faisant suite, la réaction étant arrêtée par abaissement de la température, addition d'un inhibiteur et/ou consommation de l'amorceur.

**8.** Procédé selon au moins l'une des revendications 1 à 7, **caractérisé en ce que** lors de l'arrêt de la polymérisation le degré de polymérisation est compris entre 85 et 95 % en poids.

**9.** Procédé selon au moins l'une des revendications 1 à 8, **caractérisé en ce que** le second mélange de monomères contient à au moins 90 % en poids des acrylates et/ou méthacrylates, de préférence du MMA, du (méth)acrylate de n-butyle, du (méth)acrylate d'isobutyle, du (méth)acrylate d'éthyle, du (méth)acrylate de propyle et/ou du (méth)acrylate d'éthylhexyle, à jusqu'à 5 % en poids des monomères à fonction acide, de préférence de l'acide acrylique, de l'acide méthacrylique, de l'acide itaconique et/ou de l'acrylate de 2-carboxyéthyle et en option du styrène, chaque fois par rapport au poids total du second mélange de monomères.

10. Procédé selon au moins l'une des revendications 1 à 9, **caractérisé en ce que** le second mélange de monomères est choisi de façon telle que, lorsqu'il est polymérisé, il comporte en un polymère présentant une température de transition vitreuse selon l'équation de Fox entre 50 °C et 120 °C, de préférence entre 60 et 90 °C.

11. Formulation destinée au revêtement intumescent bicomposant, **caractérisée en ce que** la formulation comporte après mélange du système bicomposant 20 à 40 % en poids de la résine réactive pouvant être préparée selon les revendications 1 à 10, 35 à 60 % en poids d'un agent porogène, 0,1 à 2,5 % en poids d'un peroxyde et/ou amorceur azoïque, en option jusqu'à 2 % en poids d'un accélérateur, en option 4,9 à 15 % en poids d'additifs et 5 à 30 % en poids de charges, chaque fois par rapport au poids total du système bicomposant.

12. Formulation destinée au revêtement intumescent bicomposant, **caractérisée en ce que** la formulation, après mélange du système bicomposant de la résine réactive pouvant être préparée selon les revendications 1 à 10, présente un rapport d'agent porogène de polyphosphate à mélamine compris entre 1:1 et 3:1.

13. Formulation selon la revendication 11, **caractérisée en ce que** la formulation comporte en outre des pigments.

14. Procédé de revêtement intumescent d'une surface métallique, **caractérisé en ce que** la formulation selon la revendication 11 ou 12 est préparée, appliquée sur la surface métallique en l'espace de 1 à 20 minutes et y est durcie en l'espace de 60 minutes à une température comprise entre -5 et 30 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 112029367 A
- CN 111995919 A
- CA 3028431
- JP 2003171579 B
- DE 19630063
- EP 1636318 A
- EP 2171004 A
- EP 2171005 A
- WO 2021180488 A

**In der Beschreibung aufgeführte Nicht-Patentliteratur**

- **LONGDON, P. J.** Development of alternative technologies for off-site applied intumescent. *European Commission, [Report] EUR (2005), EUR 21216*, 1-141